# FASCICULE DE BREVET EUROPEEN

(11) **EP 1 687 316 B1**
(45) Date de publication et mention de la délivrance du brevet: **04.06.2014**
(21) Numéro de dépôt: 04805579.2
(22) Date de dépôt: 29.11.2004
(51) Int. Cl.: C07F 7/08

(54) **REACTIF ET PROCEDE D OBTENTION D UN DERIVE FLUORE ET SILYLE**
REAGENZ UND VERFAHREN ZUR HERSTELLUNG EINES FLUORIERTEN UND SILYLIERTEN DERIVATS
REAGENT AND METHOD FOR PREPARING A FLUORINATED AND SILYLATED DERIVATIVE

(30) Priorité: 28.11.2003 FR 0314002
(43) Date de publication de la demande: 09.08.2006
(73) Titulaire: RHODIA CHIMIE, 92512 Boulogne Billancourt Cedex (FR)
(72) Inventeur: VIDAL, Thierry, 69003 Lyon (FR); ROQUES, Nicolas, F- 81600 Brens (FR); SAINT-JALMES, Laurent, F- 69390 Vourles (FR)
(74) Mandataire: Dutruc-Rosset, Marie-Claude
(86) Numéro de dépôt international: PCT/FR2004/003053
(87) Numéro de publication internationale: WO 2005/054255

(56) Documents cités:
- EP-A- 0 411 666
- WO-A-00/60139
- WO-A-95/15936
- WO-A-98/22435
- WO-A-99/02535
- US-A- 5 948 928
- E.D. LAGANIS ET AL.: "METAL SILANOLATES: ORGANIC SOLUBLES EQUIVALENTS FOR O-2" TETRAHEDRON LETTERS, vol. 25, no. 51, 1984, pages 5831-5834, XP002288588
- N. FUJII ET AL.: "Studies on Peptides. CLII. Hard Acid Deprotecting Procedure for Peptide Synthesis" CHEM. PHARM. BULL., vol. 35, no. 8, 1987, pages 3447-3452, XP001206480
- L.A. MARGOLIS ET AL.: "A Silicon-29 NMR Study of Adduct Formation in Organosilanes" SYNTHESIS AND REACTIVITY IN INORGANIC AND METAL-ORGANIC CHEMISTRY, vol. 33, 2003, pages 359-367, XP009049608
- R. TAKANO ET AL.: "Desulfation of sulfated carbohydrates mediated by silylating reagents" J. CARBOHYDRATE CHEMISTRY, vol. 14, no. 6, 1995, pages 885-888, XP009049603

## Description

La présente invention a pour objet un procédé d'obtention d'un dérivé fluoré et silylé présentant une liaison entre un carbone porteur d'au moins un fluor et un silicium.

Elle vise plus particulièrement la synthèse de dérivés silylés dont un des carbones relié au silicium est porteur d'un, avantageusement de deux, et même trois atomes de fluor.

Les dérivés fluoroalcoylés, et notamment particulièrement les dérivés perfluoroalcoylés, se développent dans les domaines de la pharmacie et de l'agrochimie. Ces composés sont particulièrement difficiles et coûteux à réaliser sauf quelques cas particuliers.

Un des moyens de perfluoroalcoyler est d'utiliser des carbanions Rf⁻ ou d'utiliser des composés réagissant comme des carbanions.

Parmi les dérivés réagissant comme des carbanions, on peut citer les réactifs du type Rf-Si(Me)₃. Le cas où Rf est CF₃ est appelé « réactif de Ruppert ».

Ces dérivés silylés sont particulièrement difficiles à obtenir et nécessitent des séquences coûteuses ce qui rend leur application industrielle quasiment impossible ou hors de prix. On se réfère aux synthèses décrites dans :
- Organic Synthesis; Coll Index IX, 711 (synthèse utilisant Et₃N₃P) ; et dans
- J of Fluorine Chemistry, 2001, volume 112, 123-131.

C'est pourquoi un des buts de la présente invention est de fournir un procédé qui permette de réaliser des réactifs du type Rf-Si≤, c'est-à-dire un composé présentant un atome sp³ fluoré perhalogéné relié directement à un atome de silicium.

Un autre but de la présente invention est de réaliser le réactif de Ruppert ou un de ses équivalents, par une technique mettant, d'une part, en oeuvre des composés relativement peu coûteux et, d'autre part, ne nécessitant pas une séquence d'étapes particulièrement coûteuse.

Un autre but de la présente invention est de réaliser un dérivé du type ci dessus in situ, le cas échéant à l'état naissant (statu nascendi).

Ces buts et d'autres qui apparaîtront par la suite sont atteints au moyen d'un procédé d'obtention d'un dérivé fluoré et silylé présentant une liaison entre un carbone porteur d'au moins un fluor et un silicium caractérisé par le fait qu'il comporte une étape où un dérivé de formule (I) Rf-Y-O-D est mis en présence d'une base dans un solvant aprotique polaire, à une température supérieure ou égale à 100°C, dans ladite formule (I) :
- Rf représente un groupement hydrocarboné ayant de 1 à 15 atomes de carbone comprenant au moins un atome de fluor sur le carbone en α de Y,
- D est choisi parmi les radicaux silylés,
- et où Y est choisi parmi les groupes carbonyle et aminoalcoylène.

Dans la formule (I), Y est choisi parmi les groupes carbonyle (-CO-) et aminoalcoylène [-(NR₂)C(R')- ] (II) : R et R' étant définis ci-après.

Le groupe aminoalcoylène est avantageusement susceptible d'être issu de l'action sur un amide utilisé comme solvant d'un Rf suivi d'une silylation (confère les demandes PCT au nom de la demanderesse n° WO 97/19038 et n WO 98/22435) pour donner un produit de structure : 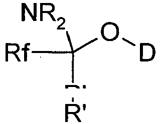 où les deux R, identiques ou différents sont tels que HNR₂ soit une amine secondaire, éventuellement cyclique, avantageusement d'au plus 10 atomes de carbone et où R' est hydrogène ou bien un radical aliphatique (c'est-à-dire dont la liaison ouverte est portée par un carbone sp³ éventuellement fonctionnalisé) ou aromatique (liaison ouverte portée par un carbone intracyclique d'un noyau aromatique), avantageusement d'au plus 10 atomes de carbone, de préférence d'au plus 6.

R et R' peuvent représenter un groupe alcoyle, cycloalcoyle ou aryle.

Deux groupes R peuvent être reliés pour former un hétérocycle saturé ou insaturés comprenant 5 ou 6 atomes.

Dans le cadre de l'invention, on entend par « alcoyle », une chaîne hydrocarbonée linéaire ou ramifiée ayant de 1 à 10 atomes de carbone et de préférence de 1 à 4 atomes de carbone.

Des exemples de groupes alcoyle préférés sont notamment méthyle, éthyle, propyle, isopropyle, butyle, isobutyle, t-butyle.

Par « cycloalcoyle », on entend un groupe hydrocarboné cyclique, monocyclique comprenant de 5 ou 6 atomes de carbone, de préférence, un groupe cyclopentyle ou cyclohexyle.

Par « aryle », on entend un groupe mono- ou polycyclique aromatique, de préférence, mono- ou bicyclique comprenant de 6 à 10 atomes de carbone, de préférence, phényle.

Comme bases préférées, on peut citer le trifluoroacétate de sodium ou de potassium.

La quantité de base à introduire n'est critique que dans la mesure où cette dernière, dans les conditions opératoires, est instable, notamment si elle réagit sur le dérivé de formule (I) et le consomme ; dans ce cas il préférable de n'utiliser que des quantités, exprimées en équivalent, inférieures à la quantité du dérivé de formule (I).

Plus on ajoute de base, plus grande est la cinétique. La limitation supérieure dépend de la solubilité de la base dans le milieu, de sa force et de son activité.

Toutefois, en général, pour avoir une certaine efficacité, il est préférable que le rapport molaire (B/DI) entre la base exprimée en équivalent (numérateur) et le dérivé de formule (I) exprimé en équivalent soit au moins de 0,005, avantageusement de 0,01, de préférence de 0,02.

Une valeur supérieure est encore moins critique, surtout lorsque l'on le verra par la suite, l'on s'arrange pour que le temps de séjour des composés formés soit faible.

Toutefois, on peut indiquer qu'en général le rapport molaire (B/DI) entre la base exprimée en équivalent et le dérivé de formule (I) exprimé en équivalent est au plus égal à 2, de préférence à 1, avantageusement à 0,5, plus préférentiellement à 0,2. Ces valeurs supérieures sont surtout intéressantes lorsque la base est relativement instable. Cela peut, notamment être le cas dans le cadre de certains carboxylates.

La réaction est menée dans un milieu ou solvant aprotique. Ledit solvant, ou milieu, aprotique comporte avantageusement une concentration d'acide(s) de pKa inférieure à 20, avantageusement à 25, de préférence à 30, au plus égale à 1000 ppm en moles par rapport aux moles de solvant(s). En effet, ces milieux acides réagissent avec le dérivé carboné fluoré et silylé désiré en le détruisant. Une concentration en eau ou en acide telle que définie ci-dessus abaisse significativement le rendement.

Le milieu ou solvant est un solvant aprotique polaire, avantageusement un solvant aliphatique.

Dans le cas des solvants aprotiques polaires, il est préférable que l'une au moins des conditions ci après soit réunie, avantageusement les deux. Il est souhaitable que le nombre, ou indice, donneur du dit solvant soit au moins égal à 10, avantageusement à 20 ; et il est également souhaitable que l'epsilon (constante diélectrique) soit au moins égal à 10, avantageusement à 15.

Rappelons que pour la définition de l'indice donneur (ou nombre donneur : "donor number"), on peut se référer à l'ouvrage de Christian Reichardt, Solvents and solvents effects in organic chemistry, p. 19 (1988), ouvrage où l'on trouve comme définition le négatif de l'enthalpie (-ΔH exprimé en kilocalorie/mol) de l'interaction entre le solvant et le pentachlorure d'antimoine dans une solution diluée de dichlorométhane.

Le point d'ébullition des solvants utilisables pour la présente invention est avantageusement au moins égal à la température de réaction, laquelle est usuellement supérieure ou égale à 100°C, avantageusement supérieure à 120°C. La température maximale de réaction est avantageusement au plus égale à 200°C (un, de préférence deux, chiffres significatifs).

Lorsque l'on utilise du diméthylformamide, la température à utiliser est de préférence entre 130°C et 170°C, plus préférentiellement de 130°C à 150°C.

Pour différentes raisons, notamment de recyclage il est préférable que les solvants ne présentent, en milieu aqueux, de caractère affirmé basique ou acide. Ainsi il est plus pratique que, lorsque le solvant, ou l'un des constituants du solvant a un caractère basique, l'acide associé à la base présente un pKa soit au moins égal à 5, avantageusement à 5,5. Les contraintes optimales sur l'acidité ont été exposées auparavant.

Il est préférable que, à l'exception des amides peralcoylés, le solvant ne présente pas de fonction carbonyle, à moins que l'on veuille faire réagir le réactif Rf-D sur ladite fonction carbonyle. D'ailleurs, le plus souvent les dérivés carbonylés présentant un hydrogène en alpha sont trop acides pour donner de bon rendement.

Ainsi la réaction est menée à une température telle que la réaction, symbolisée par l'une des équations ci-après, ait lieu.

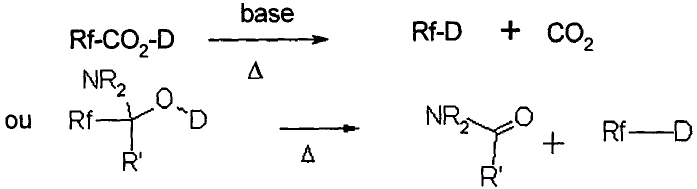

La température de réaction (thermolyse) est usuellement supérieure ou égale à 100°C, avantageusement supérieure à 120°C. La température maximale de réaction est avantageusement au plus égale à 200°C (un, de préférence deux chiffres significatifs). La température à utiliser est de préférence entre 130°C et 170°C, plus préférentiellement de 130°C à 150°C.

La pression ne joue pas un rôle essentiel mais il peut être intéressant lorsque les composés sont trop volatils, notamment lorsque les produits de départ sont volatils, d'imposer une pression supérieure à la pression atmosphérique.

Toutefois, dans ce cas-là, on a intérêt à faire en sorte que l'on puisse retirer le produit désiré formé du mélange réactionnel aussi rapidement que possible. En effet, la grande réactivité de ces produits, si elle est très avantageuse pour leurs propriétés, est un handicap lors de leur synthèse.

Pour réduire le temps de séjour du produit désiré dans le mélange réactionnel, on peut soit réaliser la réaction rapidement et attendre que le taux de transformation du dérivé de formule (I) atteigne une valeur, relativement faible, choisie à l'avance, en général entre 10 et 50%, puis à séparer les produits et recycler le produit de départ vers la réaction.

Une autre possibilité est de faire une dérivation sur le réacteur et éliminer en boucle au fur et à mesure de sa formation le produit désiré.

Enfin, lorsque les produits de la réaction et notamment le dérivé Rf-D, sont plus volatils que le solvant, il est possible de séparer en continu le produit désiré (Rf-D) au fur et à mesure de sa formation.

Cela est particulièrement vrai quand Rf présente un nombre de carbones inférieur à 5 atomes de carbone.

Les solvants ayant donné le meilleur résultat dans le cadre de la présente étude sont des amides peralcoylés, c'est-à-dire ne portant plus d'hydrogène libre. Ce résultat est surprenant dans la mesure où de tels amides sont connus pour donner une réaction avec le réactif de Ruppert (CF₃-SiMe₃), ce que confirme la présente étude. Toutefois, cette réaction semble défavorisée aux températures ci dessus et c'est la raison pour laquelle il est préférable de récupérer le composé désiré (Rf-D) avant de laisser refroidir et encore plus préférable de le récupérer au fur et à mesure de sa formation lorsque l'on utilise de tels solvants.

Comme exemples préférés de solvants, on peut citer notamment les carboxamides linéaires ou cycliques comme le N,N-diméthylacétamide (DMAC), le N,N-diéthylacétamide, le diméthylformamide (DMF), le diéthylformamide ou la 1-méthyl-2-pyrrolidinone (NMP) ; le diméthylsulfoxyde (DMSO) ; la tétraméthylènesulfone (sulfolane).

Une autre variété de solvant donnant satisfaction est la famille des éthers comme par exemple, le diméthyléther de l'éthylèneglycol (ou glyme), le diméthyléther du diéthylèneglycol (ou diglyme).

Il convient toutefois de signaler à nouveau que les amides, s'ils permettent la réaction et s'ils la favorisent grandement, présentent l'inconvénient dans certaines conditions de se condenser avec les réactifs désirés selon la présente invention. Ainsi, le réactif de Ruppert est susceptible à température relativement basse de réagir sur le carbonyle du diméthylformamide pour donner un dérivé silylé de formule Rf-CH[N(CH₃)₂]-O-D.

Mais cette réaction est réversible car le produit de la réaction d'addition sur l'amide peut par chauffage redonner le produit désiré. Au cours de l'étude ayant mené à la présente invention la réaction ci après a été mise en évidence.

L'on reconnaît le composé de formule (I) où le Y est aminométhylène.

Par Rf, on entend un radical de formule :

GEA -(CX₂)ₚ- (IV)

où :
- les X, semblables ou différents, représentent un chlore, un fluor ou un radical de formule CₙF₂ₙ₊₁ avec n entier au plus égal à 5, de préférence à 2, avec la condition qu'au moins un des X soit fluor, fluor avantageusement porté par le carbone porteur de la liaison ouverte ;
- p représente un entier au plus égal à 2 ;
- GEA représente un groupe électroattracteur (c'est-à-dire dont la constante de Hammett sigma p [σₚ] supérieur à 0, avantageusement à 0,1, de préférence à 0,2) dont les éventuelles fonctions sont inertes dans les conditions de la réaction, avantageusement fluor ou un reste perfluoré de formule C_{ν}F_{2ν+1}, avec ν entier au plus égal à 8, avantageusement à 5.

Dans la formule (IV), p est égal à 1 ou 2.

Le nombre total de carbone de Rf est avantageusement choisi dans l'intervalle fermé (c'est-à-dire bornes comprises) allant de 1 à 15, de préférence de 1 à 10 et encore plus préférentiellement de 1 à 4.

Avantageusement Rf répond à la formule :

GEA - (CX₂)₍ₚ₋₁₎ - CF₂- (V)

Les résultats sont particulièrement intéressants quand la moitié au moins des X sont fluor, avantageusement les ¾, de préférence la totalité.

Un autre ensemble intéressant celui où la moitié au moins des radicaux X et GEA avantageusement les ¾, de préférence la totalité, sont choisis parmi les atomes de fluor et les restes perfluorés de formule C_{ν}F_{2ν+1} avec ν entier au plus égal à 8, avantageusement à 5.

L'intersection des deux ensembles (c'est-à-dire le sous ensemble répondant aux deux contraintes ci-dessus) correspond à l'une des mises en oeuvre préférées ; ainsi, l'une des mises en oeuvre préférées consiste à choisir Rf parmi les radicaux perfluorés de formule C_{ν}F_{2ν+1} avec ν entier choisi dans l'intervalle fermé (c'est-à-dire bornes comprises) allant de 1 à 15, de préférence de 1 à 10. Notamment pour des raisons de facilité de distillation, il peut être opportun de choisir pour ν, une valeur au plus égale à 8, avantageusement à 5, de préférence à 3.

En particulier Rf peut être choisi parmi le trifluorométhyle, le pentafluoroéthyle, les heptafluoropropyles et les nonafluorobutyles (notamment le linéaire).

Le radical Rf peut porter au moins une autre fonction de même nature (c'est-à-dire que la séquence d'atomes caractéristique de la fonction, ici carboxylate de silyle [CO-O-Si] est la même mais que les substituants peuvent être différent) que celle, le plus souvent identique (c'est-à-dire porteuse des même substituants), à celle qui est l'objet de l'invention, de manière à obtenir un composé di ou polyfonctionnel.

Dans ce cas GEA est, ou est porteur de la dite fonction, à savoir carboxylate de silyle.

Quand GEA est ladite fonction, alors p est au moins égal à deux.

Lorsque l'on utilise des bases qui sont silicophiles, la base réagit sur le composé de formule (I) pour donner le sel d'acide correspondant. C'est ce sel d'acide qui, à ce moment-là, jouera un rôle de base.

Ainsi, parmi les bases utilisables, on peut utiliser le sel d'acide correspondant (Rf-COO⁻). Ce sel se décompose en raison du pouvoir fortement électroattracteur du radical Rf, ce qui peut induire des réactions parasites et abaisser le rendement de transformation (RT, c'est-à-dire le rendement en produit désiré ramené en substrat consommé par la réaction). En revanche, le rendement de réaction (RR, c'est-à-dire le rendement en produit désiré par rapport à la quantité de substrat initial mise en jeu ; RR = TT x RT) est en général assez élevé.

L'homme du métier pourra donc choisir selon qu'il désire un rendement de réaction élevé RR, (rendement en produit désiré par rapport à la quantité de substrat initial mise en jeu ; RR = TT x RT) ou une sélectivité élevée.

En revanche, des bases plus faibles et peu silicophiles comme, par exemple, les halogénures plus lourds que le fluor et notamment chlorure améliore les rendements de transformation, mais présentent une plus faible réactivité et donc réduisent le taux de transformation (TT = quantité de produit transformé rapporté à la quantité de produit initiale), le rendement de réaction (RR) ainsi que la productivité et le rendement volumique.

Les co-cations des bases sont avantageusement des alcalins, avantageusement de rang au moins égal à celui du sodium ou des cations organiques assez gros, tels que les oniums, notamment les tétraalcoylammoniums et les tétraalcoylphosphoniums. On peut également utiliser les tétraarylammoniums et tétraarylphosphoniums. On peut également utiliser des oniums mixtes, c'est-à-dire comportant à la fois des aryles et des alcoyles.

Rappelons que les oniums sont les cations dont le nom comporte un affixe (généralement suffixe) « onium », tel que sulfonium, phosphonium, ammonium, ...), du type tétraalcoylammonium tétraarylphosphonium, trialcoylsulfonium. Ces oniums, sont avantageusement des cations formés par les éléments métalloïdes des colonnes V B et VI B (tels que définis dans le tableau de la classification périodique des éléments publiés au supplément au Bulletin de la Société Chimique de France en janvier 1966) avec respectivement 4 ou 3 chaînes hydrocarbonées monovalentes. Il convient de noter que les oxoniums sont peu stables et ne peuvent être utilisés dans cette application. Parmi ces oniums, les préférés sont les tétraalcoylammonium présentant de 4 à 24 atomes de carbone, de préférence de 4 à 12 atomes de carbone, les tétraalcoylphosphoniums présentant de 4 à 24 atomes de carbone, de préférence de 4 à 12 atomes de carbone et les tétraarylphophonium, ainsi que les mixtes alcoyltriarylphophonium ; dialcoyldiaryl phosphonium et trialcoylmono arylphosphonium.

Il peut également être intéressant d'utiliser des dérivés ayant une charge positive très délocalisée comme dans le cas des bases de Schwesinger ou plus simplement des « iniums » tel que notamment les imidazoliniums ou les guanidiniums et les composés utilisés comme solvants ioniques ou sels fondus.

Rappelons que les iniums sont des cations dont le nom comporte un affixe (généralement suffixe) « inium », tel que sulfinium, phosphinium, iminium, pyridinium, ...) on préfère les iniums formés par les éléments métalloïdes des colonnes V B et VI B (tels que définis dans le tableau de la classification périodique des éléments publiés au supplément au Bulletin de la Société Chimique de France en janvier 1966) avec respectivement 3 ou 2 chaînes hydrocarbonées dont une est bivalente et forme une double liaison avec ledit élément métalloïde et les autres étant monovalentes. Les éléments de la colonne V B sont préférés et parmi ces derniers, l'azote. les iniums dont l'élément métalloïde est le seul oxygène ne sont d'ordinaire pas assez stable pour être utilisé dans la présente invention.

Lorsque l'on utilise un solvant ionique ou un sel fondu, on peut choisir l'anion ou l'un des anions comme base susceptible de donner lieu à la réaction.

Parmi les anions bases préférés, on peut citer les halogénures et surtout le chlorure.

Les superacides ne donnent pas des anions susceptibles de jouer le rôle d'une base dans le cadre de la présente invention. Ainsi, les anions correspondants à des acides dont la constante de Hammett dans l'échelle des acides est supérieure à 13 et même supérieure à 12 sont à éviter.

La présente invention peut être mise en oeuvre en utilisant la réaction selon la présente invention pour faire in situ un réactif du type Ruppert et réaliser ainsi la réaction de fluoroalcoylation sans isoler le réactif Rf-D.

Ainsi la présente invention vise un réactif qui comporte pour addition successive ou simultanée :
- une base faible et faiblement silicophile,
- un composé de formule (I) avec Y étant un carbonyle ;
- un solvant dont le point d'ébullition est au moins égal à 100°C, avantageusement supérieure à 120°C avantageusement entre 130°C et 170°C, plus préférentiellement de 130°C à 150°C.

Dans le réactif, si la base est un silanolafie, elle est en quantité au plus égale à une demi fois, avantageusement un quart de fois, de préférence un dixième de fois la quantité molaire de composé de formule (I)

La présente invention vise aussi l'utilisation du réactif ci dessus pour greffer un Rf sur un substrat électrophile par chauffage à une température au moins égale à 120°C, avantageusement entre 130 et 170°C, plus préférentiellement de 130 à 150°C.

Il convient de mentionner que le dérivé de formule Rf-C(O)-O-D peut être synthétisé dans le milieu réactionnel, avantageusement avant d'atteindre la température de distillation du composé DX, par action de l'anion Rf-C(O)-O- sur un composé DX où X est un groupe partant halogène ou pseudo halogène.

X- est avantageusement choisi parmi les anions qui forme une base préférée selon la présente invention, excepté cela va sans dire, Rf-C(O)-O⁻. Un des groupes partants satisfaisant est le chlore car le mélange réactionnel est alors prêt à être soumis à la thermolyse donnant le produit désiré car il possède à la fois les anions jouant un rôle catalytique basique et le composé de formule I. Si l'on veut comme base le Rf-C(O)-O- il suffit de se placer en sous stoechiométrie du DX.

Les exemples non limitatifs suivants, illustrent l'invention.

Compte tenu de la réactivité, de la volatilité des produits de réaction et des difficultés analytiques, les rendements présentent une indétermination relativement élevée.

### Exemple I : essais qualitatifs avec différentes bases

On conduit une série d'essais dans lesquels on met en oeuvre différentes bases.

La base (1 mmol) est chargé dans un tube Schott de 60 ml sous atmosphère d'argon. Le DMF (2 ml) puis le trifluoroacétate de triméthylsilyle (372 mg, 2 mmol) sont ajoutés à 20°C sous atmosphère d'argon.

Le tube est fermé et le mélange réactionnel est chauffé à 140°C pendant la durée désirée.

Après retour à 20°C, le milieu réactionnel est analysé sans autre traitement. Les performances sont rassemblées dans le tableau ci-après.

**Tableau (I)**

| Base au sens de la description | Rendement de réaction.(R.R) CF₃-Si Me₃ % | Taux de trasformation (T.T.) TFATMS % | Rendement de transformation (RT= RR/TT) |
|---|---|---|---|
| Fluorure de tétrabutylammonium | * | * | *** |
| Diméthylaminopyridine | * | *** | * |
| Tétraméthylguanidine | *** | **** | ** |
| 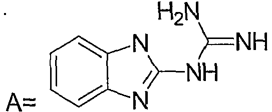 | * | **** | * |
| 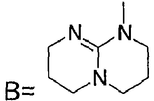 | ** | **** | * |
| KCI | *** | ** | **** |
| Chlorure de butylméthyl imidazolinium | * | **** | * |
| TFAK | **** | **** | **** |

| | | | |
|---|---|---|---|
| * : médiocre ** : moyen *** : bon **** : très bon ***** : excellent | | | |

### Exemple II : Trifluoroacétate de triméthylsilyle en présence de trifluoroacétate de potassium

Le trifluoroacétate de potassium (152 mg, 1 mmol) est chargé dans un tube Schott de 60 ml sous atmosphère d'argon.

Le DMF (2 ml) puis le trifluoroacétate de triméthylsilyle (372 mg, 2 mmol) sont ajoutés à 20°C sous atmosphère d'argon.

Le tube est fermé et le mélange réactionnel est chauffé à 140°C pendant la durée désirée.

Après retour à 20°C, le milieu réactionnel est analysé sans autre traitement. Les performances sont rassemblées dans le tableau ci-après.

**Tableau (II)**

| Essai | Solvant | Durée (h) | Temperature (°C) | TFAK/TFATMS | (TFATMS) ^{(a)} (%) | RR (CF₃SiMe₃) ^{(a)} (%) | RT |
|---|---|---|---|---|---|---|---|
| 1A | DMF | 3 | 140 | 1/10 | 11 | 8 ou 75 ^{(b)} | / |
| 1B | DMF | 2 | 140 | 1/1 | 32 | 11 | 34 |
| 1C | DMF | 5h45 | 140 | 1/1 | 48 | 15 | 31 |

| | | | | | | | |
|---|---|---|---|---|---|---|---|
| (a) Dosage par RMN 19F avec étalon interne (b) RR = 8% par rapport au TFATMS et RR = 75% par rapport au TFAK. | | | | | | | |

### Exemple III : Trifluoroacétate de triméthylsilyle en présence de chlorure de potassium

Le chlorure de potassium (74,5 mg, 1 mmol) est chargé dans un tube Schott de 60 ml sous atmosphère d'argon.

Le DMF (2 ml) puis le trifluoroacétate de triméthylsilyle (372 mg, 2 mmol) sont ajoutés à 20°C sous atmosphère d'argon.

Le tube est fermé et le mélange réactionnel est chauffé à 140°C pendant la durée désirée.

Après retour à 20°C, le milieu réactionnel est analysé sans autre traitement. Les performances sont rassemblées dans le tableau ci-après.

**Tableau (III)**

| Essai | Solvant | Durée (h) | Température (°C) | KCl / TFATMS | (TFATMS) ^{(a)} (%) | RR (CF₃SiMe₃) ^{(a)} (%) | RT |
|---|---|---|---|---|---|---|---|
| 2a | DMF | 4 | 140 | 8/10 | 5 | 3 | 60 |
| 2b | DMF | 4 | 140 | 7/10 | 13 | 6 | 46 |
| 2c | PhCN ^{(b)} | 4 | 140 | 6/10 | 15 | 3.5 | 23 |

| | | | | | | | |
|---|---|---|---|---|---|---|---|
| (a) Dosage par RMN 19F avec étalon interne (b) source de chlorure : Me₄NCl. | | | | | | | |

### Exemple IV : - Trifluoroacétate de triméthylsilyle en présence de trifluoroacétate de potassium(addition et distillation en continu)

Sur un pied de DMF (7,13 g) chauffé à 140°C, est ajoutée une solution de trifluoroacétate de potassium (1,2 g, 7,74 mmol) et de trifluoroacétate de triméthylsilyle (3,09 g, 16,6 mmol) dans du DMF (7,1 g) en 2h 40.

Une fois l'addition achevée, le chauffage est maintenu pendant 45 minutes.

En cours de réaction les composés volatils sont récoltés dans des pièges refroidis à -78°C.

Une fois le chauffage achevé et retour à 20°C, les différentes phases (Volatils recondensés et DMF) sont analysées par potentiométrie et RMN 19F.

Dans ces conditions, le RR est de 22% molaire et le TT en TFATMS de 66% molaire (RT=33%).

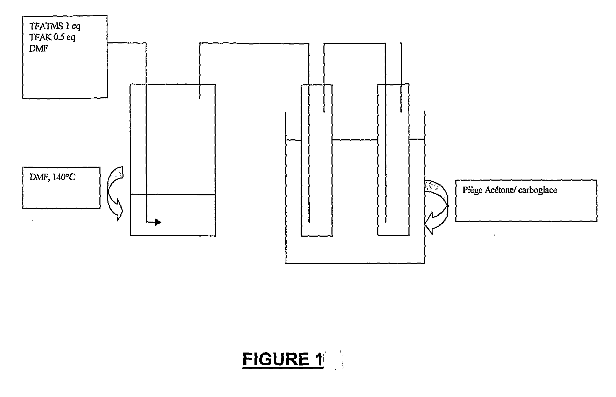

Le schéma du montage utilisé est donné à la figure 1.

### Exemple V : - Trifluoroacétate de triméthylsilyle en présence de chlorure de potassium (addition et distillation en continu).

Sur un pied de DMF (7,13 g) chauffé à 140°C contenant du chlorure de potassium (990 mg, 13,28 mmol), est ajoutée une solution de trifluoroacétate de triméthylsilyle (3,09 g, 16,6 mmol) dans du DMF (7,1 g) en 3 h 40.

Une fois l'addition achevée, le chauffage est maintenu pendant 45 minutes.

En cours de réaction les composés volatils sont récoltés dans des pièges refroidis à -78°C.

Une fois le chauffage achevé et retour à 20°C, les différentes phases (Volatils recondensés et DMF) sont analysées par potentiométrie et RMN 19F.

Dans ces conditions, le RR est de 3% molaire et le TT en TFATMS de 7% molaire (RT = 43%).

Le schéma du montage utilisé est identique au précédent.

## Revendications

1. Procédé d'obtention d'un dérivé fluoré et silylé, de formule Rf-D, présentant une liaison entre un carbone porteur d'au moins un fluor et un silicium **caractérisé par le fait qu'**il comporte une étape où un dérivé de formule (I) Rf-Y-O-D est mis en présence d'une base, dans un solvant aprotique polaire, à une température supérieure ou égale à 100°C,
dans ladite formule (I) et dans ladite formule Rf-D :
- Rf représente un groupement hydrocarboné ayant de 1 à 15 atomes de carbone comprenant au moins un atome de fluor sur le carbone en α de Y,
- D est choisi parmi les radicaux silylés,
- et où Y est choisi parmi les groupes carbonyle et aminoalcoylène.

2. Procédé selon la revendication 1, **caractérisé par le fait que** Y est un aminoalcoylène de formule :
-(NR₂)C(R')- (II)
où les deux R, identiques ou différents sont tels que HNR₂ soit une amine secondaire, éventuellement cyclique, et où R' est hydrogène ou bien un radical aliphatique (c'est-à-dire dont la liaison ouverte est portée par un carbone sp³ éventuellement fonctionnalisé) ou aromatique (liaison ouverte portée par un carbone intracyclique d'un noyau aromatique).

3. Procédé selon la revendication 1, **caractérisé par le fait que** Y est carbonyle.

4. Procédé selon l'une des revendications 1 à 3, **caractérisé par le fait que** D répond à la formule Si(R₁)(R₂)(R₃) (III) avec R₁, R₂ et R₃ identiques ou différents étant choisis parmi les aryles, les alcoyles, alcoyloxyles, les halogènes.

5. Procédé selon l'une des revendications 1 à 3, **caractérisé par le fait que** D répond à la formule Si(R₁)(R₂)(R₃) (III) avec R₁ et R₂ identiques ou différents étant choisis parmi les aryles, les alcoyles, et R₃ étant choisi parmi les aryles, les alcoyles et aussi parmi les radicaux alcoyloxyles.

6. Procédé selon l'une des revendications 1 à 5, **caractérisé par le fait que** Rf représente un groupement hydrocarboné ayant de 1 à 10 atomes de carbone.

7. Procédé selon la revendication 6, **caractérisé par le fait que** Rf est choisi parmi le trifluorométhyle, le pentafluoroéthyle, les heptalfluoropropyles et les nonafluorobutyles.

8. Procédé selon la revendication 7, **caractérisé par le fait que** Rf est le trifluorométhyle.

9. Procédé selon l'une des revendications 1 à 8, **caractérisé par le fait que** la base est une base faible et telle que le pKa de l'acide associé soit au plus égal à 7.

10. Procédé selon l'une des revendications 1 à 9, **caractérisé par le fait que** la base est un trifluoroacétate de sodium ou de potassium.

11. Procédé selon l'une des revendications 9 et 10, **caractérisé par le fait que** le rapport molaire entre la base exprimée en équivalent (numérateur) et le dérivé de formule (I) est au moins égal à 0,005.

12. Procédé selon l'une des revendications 9 à 11, **caractérisé par le fait que** le rapport molaire entre la base exprimée en équivalent (numérateur) et le dérivé de formule (I) exprimé en mole est au plus égal à 2.

13. Procédé selon l'une des revendications 1 à 12, **caractérisé par le fait que** ledit solvant comporte une concentration d'acide(s) de pKa supérieure à 20, au plus égale à 1000 ppm en mole par rapport aux moles de solvant(s).

14. Procédé selon l'une des revendications 1 à 13, **caractérisé par le fait que** la réaction est menée dans un solvant aprotique polaire dont le nombre donneur DN est au moins égal à 10.

15. Procédé selon l'une des revendications 1 à 14, **caractérisé par le fait que** la réaction est menée dans un solvant aprotique polaire dont la constante diélectrique epsilon est au moins égal à 10.

16. Procédé selon l'une des revendications 1 à 15 **caractérisé par le fait que** le solvant organique est le diméthylformamide.

17. Procédé selon l'une des revendications 3 à 16, **caractérisé par le fait que** la réaction est menée à une température telle que la réaction, symbolisée par l'équation ci-après, ait lieu

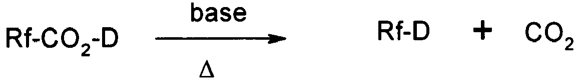

18. Procédé selon l'une des revendications 1 à 17 **caractérisé par le fait que** la température de la réaction est supérieure à 120°C.

19. Procédé selon l'une des revendications 1 à 18, **caractérisé par le fait que** la pression est choisie de manière à être au moins égale à la pression atmosphérique.

## Patentansprüche

1. Verfahren zur Herstellung eines Fluor-silyl-derivats der Formel Rf-D mit einer Bindung zwischen einem Kohlenstoff, der mindestens ein Fluor trägt, und einem Silicium, **dadurch gekennzeichnet, dass** es einen Schritt umfasst, bei dem man ein Derivat der Formel (I) Rf-Y-O-D in einem polaren aprotischen Lösungsmittel bei einer Temperatur größer gleich 100°C mit einer Base in Berührung bringt,
in der Formel (I) und in der Formel Rf-D:
- Rf für eine Kohlenwasserstoffgruppe mit 1 bis 15 Kohlenstoffatomen, die an dem Kohlenstoff in α-Stellung zu Y mindestens ein Fluoratom umfasst, steht,
- D aus Silylresten ausgewählt ist
- und wobei Y aus Carbonyl- und Aminoalkylengruppen ausgewählt ist.

2. Verfahren nach Anspruch 1, **dadurch gekennzeichnet, dass** es sich bei Y um ein Aminoalkylen der Formel:
-(NR₂)C(R')- (II)
handelt, wobei die beiden Gruppen R, die gleich oder verschieden sind, so beschaffen sind, dass HNR₂ ein gegebenenfalls cyclisches sekundäres Amin ist, und wobei R' Wasserstoff oder ein alipha-tischer Rest (das heißt, dessen offene Bindung sich an einem gegebenenfalls funktionalisierten sp³-Kohlenstoff befindet) oder aromatischen Rest (offene Bindung an einem intracyclischen Kohlenstoff eines aromatischen Rings) ist.

3. Verfahren nach Anspruch 1, **dadurch gekennzeichnet, dass** es sich bei Y um Carbonyl handelt.

4. Verfahren nach einem der Ansprüche 1 bis 3, **dadurch gekennzeichnet, dass** D der Formel Si(R₁) (R₂) (R₃) (III) entspricht, wobei R₁, R₂ und R₃, die gleich oder verschieden sind, aus Arylresten, Alkylresten, Alkyloxyresten und Halogenen ausgewählt sind.

5. Verfahren nach einem der Ansprüche 1 bis 3, **dadurch gekennzeichnet, dass** D der Formel Si(R₁) (R₂)(R₃) (III) entspricht, wobei R₁ und R₂, die gleich oder verschieden sind, aus Arylresten oder Alkylresten ausgewählt sind und R₃ aus Arylresten, Alkylresten sowie Alkyloxyresten ausgewählt ist.

6. Verfahren nach einem der Ansprüche 1 bis 5, **dadurch gekennzeichnet, dass** Rf für eine Kohlenwasserstoffgruppe mit 1 bis 10 Kohlenstoffatomen steht.

7. Verfahren nach Anspruch 6, **dadurch gekennzeichnet, dass** Rf aus Trifluormethyl, Pentafluorethyl, Heptafluorpropylresten und Nonafluorbutylresten ausgewählt ist.

8. Verfahren nach Anspruch 7, **dadurch gekennzeichnet, dass** es sich bei Rf um Trifluormethyl handelt.

9. Verfahren nach einem der Ansprüche 1 bis 8, **dadurch gekennzeichnet, dass** die Base eine schwache Base ist und so beschaffen ist, dass der pKa-Wert der korrespondierenden Säure höchstens gleich 7 ist.

10. Verfahren nach einem der Ansprüche 1 bis 9, **dadurch gekennzeichnet, dass** es sich bei der Base um Natrium- oder Kaliumtrifluoracetat handelt.

11. Verfahren nach einem der Ansprüche 9 und 10, **dadurch gekennzeichnet, dass** das Molverhältnis zwischen der Base in Äquivalenten (Zähler) und dem Derivat der Formel (I) mindestens gleich 0,005 ist.

12. Verfahren nach einem der Ansprüche 9 bis 11, **dadurch gekennzeichnet, dass** das Molverhältnis zwischen der Base in Äquivalenten (Zähler) und dem Derivat der Formel (I) in Mol höchstens gleich 2 ist.

13. Verfahren nach einem der Ansprüche 1 bis 12, **dadurch gekennzeichnet, dass** das Lösungsmittel eine Konzentration von Säure(n) mit einem pKa-Wert von mehr als 20 von höchstens 1000 Mol-ppm, bezogen auf Mole Lösungsmittel, enthält.

14. Verfahren nach einem der Ansprüche 1 bis 13, **dadurch gekennzeichnet, dass** die Umsetzung in einem polaren aprotischen Lösungsmittel, dessen Donorzahl DN mindestens gleich 10 ist, durchgeführt wird.

15. Verfahren nach einem der Ansprüche 1 bis 14, **dadurch gekennzeichnet, dass** die Umsetzung in einem polaren aprotischen Lösungsmittel, dessen Dielektrizitätskonstante epsilon mindestens gleich 10 ist, durchgeführt wird.

16. Verfahren nach einem der Ansprüche 1 bis 15, **dadurch gekennzeichnet, dass** es sich bei dem organischen Lösungsmittel um Dimethylformamid handelt.

17. Verfahren nach einem der Ansprüche 3 bis 16, **dadurch gekennzeichnet, dass** man die Umsetzung bei einer solchen Temperatur durchgeführt, dass die durch die nachstehende Gleichung symbolisierte Reaktion stattfindet:

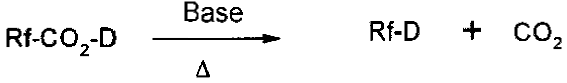

18. Verfahren nach einem der Ansprüche 1 bis 17, **dadurch gekennzeichnet, dass** die Temperatur der Umsetzung über 120°C liegt.

19. Verfahren nach einem der Ansprüche 1 bis 18, **dadurch gekennzeichnet, dass** der Druck so gewählt wird, dass er mindestens gleich dem Atmosphärendruck ist.

## Claims

1. Process for producing a fluorinated and silylated derivative of formula Rf-D exhibiting a bond between a carbon carrying at least one fluorine and a silicon, **characterized in that** it comprises a stage where a derivative of formula (I) Rf-Y-O-D is brought into contact with a base, in a polar aprotic solvent, at a temperature of greater than or equal to 100°C;
in the said formula (I) and in the said formula Rf-D:
- Rf represents a hydrocarbon group having from 1 to 15 carbon atoms comprising at least one fluorine atom on the carbon in the α position with respect to Y,
- D is chosen from silylated radicals,
- and where Y is chosen from carbonyl and aminoalkylene groups.

2. Process according to Claim 1, **characterized in that** Y is an aminoalkylene of formula:
-(NR₂)C(R')- (II)
where the two R groups, which are identical or different, are such that HNR₂ is an optionally cyclic secondary amine and where R' is hydrogen or else an aliphatic radical (that is to say, the open bond of which is carried by an optionally functionalized sp³ carbon) or aromatic radical (open bond carried by an intracyclic carbon of an aromatic ring).

3. Process according to Claim 1, **characterized in that** Y is carbonyl.

4. Process according to one of Claims 1 to 3, **characterized in that** D corresponds to the formula Si(R₁) (R₂) (R₃) (III) with R₁, R₂ and R₃, which are identical or different, being chosen from aryls, alkyls, alkyloxyls or halogens.

5. Process according to one of Claims 1 to 3, **characterized in that** D corresponds to the formula Si(R₁) (R₂) (R₃) (III) with R₁ and R₂, which are identical or different, being chosen from aryls or alkyls and R₃ being chosen from aryls, alkyls and also from alkyloxyl radicals.

6. Process according to one of Claims 1 to 5, **characterized in that** Rf represents a hydrocarbon group having from 1 to 10 carbon atoms.

7. Process according to Claim 6, **characterized in that** Rf is chosen from trifluoromethyl, pentafluoroethyl, heptafluoropropyls and nonafluorobutyls.

8. Process according to Claim 7, **characterized in that** Rf is trifluoromethyl.

9. Process according to one of Claims 1 to 8, **characterized in that** the base is a weak base and such that the pKa of the associated acid is at most equal to 7.

10. Process according to one of Claims 1 to 9, **characterized in that** the base is a sodium or potassium trifluoroacetate.

11. Process according to either of Claims 9 and 10, **characterized in that** the molar ratio of the base, expressed in equivalents, (numerator) to the derivative of formula (I) is at least equal to 0.005.

12. Process according to one of Claims 9 to 11, **characterized in that** the molar ratio of the base, expressed in equivalents, (numerator) to the derivative of formula (I), expressed in moles, is at most equal to 2.

13. Process according to one of Claims 1 to 12, **characterized in that** the said solvent comprises a concentration of acid(s) with a pKa of greater than 20 of at most equal to 1000 ppm in moles, with respect to the moles of solvent(s).

14. Process according to one of Claims 1 to 13, **characterized in that** the reaction is carried out in a polar aprotic solvent, the donor number DN of which is at least equal to 10.

15. Process according to one of Claims 1 to 14, **characterized in that** the reaction is carried out in a polar aprotic solvent, the dielectric constant ε of which is at least equal to 10.

16. Process according to one of Claims 1 to 15, **characterized in that** the organic solvent is dimethylformamide.

17. Process according to one of Claims 3 to 16, **characterized in that** the reaction is carried out at a temperature such that the reaction, symbolized by the equation below, takes place

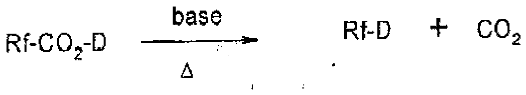

18. Process according to one of Claims 1 to 17, **characterized in that** the temperature of the reaction is greater than 120°C.

19. Process according to one of Claims 1 to 18, **characterized in that** the pressure is chosen so as to be at least equal to atmospheric pressure.
